# EUROPEAN PATENT APPLICATION

(11) **EP 4 759 869 A1**
(43) Date of publication of application: **17.06.2026**
(21) Application number: 24307089.3
(22) Date of filing: 12.12.2024
(51) Int. Cl.: C08J 9/00, C08J 9/30, C08J 9/36, C08L 1/00, C09D 199/00

(54) **METHOD FOR MANUFACTURING A CELLULAR FOAM WITH SURFACE TREATMENT**

(71) Applicant: INSTITUT NATIONAL DE RECHERCHE POUR L'AGRICULTURE, L'ALIMENTATION ET L'ENVIRONNEMENT, 75007 Paris (FR)
(72) Inventor: VOISIN, Hugo, 44000 NANTES (FR); CAPRON, Isabelle, 44300 NANTES (FR); SARTELET, Pierre Guy Robert, 44700 ORVAULT (FR)
(74) Representative: Jacobacci & Partners France

(57) **Abstract**

The present invention relates to a method for manufacturing a cellular foam with surface treatment, the manufacturing method comprising the following steps:
(a) a supplying step, for providing a cellular foam comprising a matrix defining air-filled cells, which matrix comprises (i) at least one cellulosic filler and (ii) at least one polysaccharide network, and
(b) a surface treatment step, during which said cellular cell foam is exposed to a treatment medium comprising a polar solvent in which at least one phenolic compound is dissolved.

The invention also deals with a cellular foam derived from said manufacturing method.

## Description

### Technical field of the invention

The present invention relates to the technical field of lightweight materials based on renewable sources for a wide range of applications, including, e.g., packaging, thermal insulation and energy storage. In particular, the invention concerns a method for manufacturing a cellular foam with surface treatment and a cellular foam derived from said manufacturing method.

### Prior art

Current thermal insulation solutions predominantly rely on petroleum-based materials, which pose environmental concerns due to their non-biodegradable nature and carbon-intensive production processes. Although effective as insulators, these materials lack sustainability and may contribute to ecological harm.

In contrast, bio-based materials, particularly those derived from polysaccharides like cellulose, offer a more sustainable alternative. However, they face significant challenges in water resistance. These materials are inherently hydrophilic, readily absorbing moisture, which leads to swelling, mechanical degradation, and loss of structural integrity. Such limitations restrict their use in applications where exposure to water or humidity is inevitable, such as in construction, insulation, and packaging.

Attempts to improve this have included the integration of stabilizing agents like methylcellulose (MC), which can create more stable aqueous foams. However, these methods fall short of achieving long-term water resistance. Although stabilizers can enhance initial stability, the foams often revert to their hydrophilic nature under prolonged moisture exposure, leading to degradation.

Various strategies have been explored to address this issue, including the use of hydrophobic additives and surface treatments. However, many of these treatments compromise the biodegradability of the materials, a key advantage of bio-based foams. The challenge, therefore, is to balance enhancing water resistance while maintaining the eco-friendly, degradable nature of these materials.

Improving the water resistance of bio-based foams while preserving their biodegradability remains an active research area. Although several methods have shown promise, an effective solution that provides the necessary water resistance without sacrificing environmental benefits is still lacking. Developing new formulations and treatments that achieve this balance is crucial for expanding the use of bio-based foams in industries where moisture exposure is a concern.

Thus, there is real need for new method for manufacturing bio-based cellular foams having high surface area and low weight, while having suitable water resistance and preferably resistant to biological attacks.

### Presentation of the invention

The aim of the present invention is, consequently, to propose novel method of manufacturing a cellular foam which at least partly avoid the abovementioned drawbacks.

In order to remedy the aforementioned drawback of the state of the art, the present invention proposes a method for manufacturing a cellular foam with surface treatment, the manufacturing method comprising the following steps:
- a supplying step, for providing a cellular foam comprising a matrix defining air-filled cells, which matrix comprises at least one cellulosic filler and at least one polysaccharide network, and
- a surface treatment step, during which said cellular cell foam is exposed to a treatment medium comprising a polar solvent in which at least one phenolic compound is dissolved.

The Applicant has unexpectedly found that this surface treatment with a specific polar solvent including a phenolic compound, of a cellular foam composed of one cellulosic filler and one polysaccharide network, enables to produce a solid and lightweight cellular foam, generally fully bio-based, having water barrier properties and this, in a semi-industrial way.

Indeed, as it will be shown in the experimental below, the cellular foams obtained according to the claimed method are water resistant, the intake of water after 10 minutes in a water bath being less than 0.3 gr/gr of solid cellular foam, while untreated cellular foams dissolve in water.

In addition, the variation in the composition of the cellular foam, that is to say the choose the specific compound and the weight content of cellulosic filler and/or of the polysaccharide network, makes it possible to obtain cellular foams with varied properties (varied mechanical resistance, varied weight, etc.) and therefore suitable for multiple applications (low/high temperature insulation, mechanical damping, etc.).

Hence, the cellular foams obtained according to the claimed method can be used for the thermal insulation of buildings or other applications requiring the use of ultra-light and resistant materials.

In addition, generally, the cellular foams are 100% biodegradable and have a carbon-free manufacturing process, which gives them an advantage over petroleum-based alternatives.

Moreover, it is possible to implement them in the form of panels of various sizes.

The Applicant has also discovered that in general they have also fireproof properties, which differentiates them from current bio-based alternatives (vegetable wools).

The invention also relates to a cellular foam derived from a manufacturing method as defined above.

The invention also deals with a cellular foam comprising a matrix defining air-filled cells, said matrix being composed of (i) at least one cellulosic filler, (ii) at least one polysaccharide network and optionally (iii) at least one inorganic charge, characterized in that said matrix is coated with a protective film composed of at least one phenolic compound which has complexed (and preferably linked) with said at least one polysaccharide network, said at least one phenolic compound being preferably selected from tannic acid, gallic acid or epigallocatechin or a mixture thereof.

Of course, the different features, variants and embodiments of the invention may be associated with each other in various combinations as long as they are not incompatible or exclusive of each other.

### Detailed description of the invention

### A) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

Also, unless otherwise indicated, the indication of an interval of values « from X to Y » or "between X to Y", according to the present invention, means as including the values of X and Y.

As used herein, the term "powder" refers to a material formed of particles or particulates.

As used herein, the term "particles" or "particulates" means the smallest entity that can be identified as a particulate from its appearance among the powder.

The term "size" advantageously means a physical characteristic size of the particles linked to a method of measurement (or dimensional analysis by an appropriate technique), for example by laser diffraction or sieving or image analysis.

The size of a solid particle, and more generally of a constituent of a powder, advantageously corresponds to its "equivalent sphere diameter" or "equivalent sphere diameter", that is to say advantageously the diameter in volume (dv) defined as the diameter of a perfect sphere having the same volume in the analysis as the solid particle studied. The particle size distributions can be measured by laser diffraction using for example a LS 13 320 XR particle sizer in a dry way (Beckman & Coulter).

As used herein, a "biobased" material is a material intentionally made from substances derived from living or once-living organisms, i.e., which are derived from plant- or animal-based materials such as wood, plant or agricultural byproducts. In other words, a material can also be defined as bio-based if it derives in whole, or in part, from biomass resources, i.e., organic materials that are renewable.

Also, according to the invention, by "biodegradable" material, it is meant its ability to be degraded by microorganisms or enzymes present or not in the natural environment. The action of microorganisms, such as bacteria or fungi or enzymes on the material in the presence of water and oxygen or other suitable compounds transforms it, under ideal heat and time conditions, into carbon dioxide, mineral salts and water.

According to the invention, the physical (density, viscosity, etc.) and the mechanical characteristics of the aqueous suspensions and/or the foams (whatever its state) are such as defined in the experimental part below.

### 8) The method for manufacturing a cellular foam according to the invention

The Applicant sought to develop a new method for manufacturing a solid lightweight cellular foam which includes, in general and advantageously, bio-based materials and which has excellent water barrier properties.

For that purpose, the Applicant developed a new method for manufacturing a cellular foam with surface treatment such as defined in the set of claims. In particular, the manufacturing method according to the invention comprises the following steps:
(a) a supplying step, for providing a cellular foam comprising a matrix defining air-filled cells, which matrix comprises (i) at least one cellulosic filler and (ii) at least one polysaccharide network, and
(b) a surface treatment step, during which said cellular cell foam is exposed to a treatment medium comprising a polar solvent in which at least one phenolic compound is dissolved.

As mentioned above, the Applicant has unexpectedly discovered that the use of a surface treatment based on a polar solvent including one phenolic compound, such as tannic acid, enables to provide to a cellular foam, notably a bio-based cellular foam, water resistance properties and this in a semi-industrial way.

By "water resistance properties", it is advantageously meant the ability of a material to resist the absorption or penetration of water when exposed to it.

In the context of the present invention, this refers advantageously to the capacity of the cellular foam, after being coated with a protective phenolic compound film, to limit the amount of water it absorbs when submerged or exposed to moisture.

In this case, the intake of water is a measure used to quantify the material's water resistance.

It corresponds to the difference between the final weight of the material after it has been exposed to water for a specified time (e.g., after being submerged in a water bath) and the initial weight of the dry material before exposure to water. This difference in weight indicates how much water the material has absorbed, and a lower intake of water signifies better water resistance properties.

A material with effective water resistance would show a minimal increase in weight, indicating that it absorbs very little water during exposure.

Preferably, according to the invention, the value of "intake of water" is less than 0.5 g/g of solid cellular foam.

According to the invention, the value of "intake of water" is less than 0.5 g/g of solid cellular foam, including the following values and/or any intervals from these values (in g/g): 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, and 0.50.

This range of values expresses the low water absorption capability of the solid cellular foam, ensuring its water resistance as intended by the invention.

### B.1. Supplying step

In general, the supplying step aims at providing a cellular foam comprising a matrix defining air-filled cells.

By "cellular foam" is advantageously meant a solid material that contains many gas-filled cells or holes. The cells may be open (interconnected) or closed (isolated from each other). The cellular structure gives the foam specific properties, such as low density, good thermal insulation and energy absorption capacity.

In the context of a cellular foam, "matrix" advantageously refers to the continuous solid material that forms the walls or boundaries of the air-filled cells. The matrix plays a role in determining the mechanical properties of the foam, including its strength, stiffness, and flexibility. It also influences other characteristics of the foam, such as its density, thermal insulation, and energy absorption capacity.

As stated above, said matrix comprises:
- at least one cellulosic filler and
- at least one polysaccharide network.

By "filler", it is advantageously meant a substance that is added to a material, in particular a polysaccharide network, to improve or modify its properties.

By "cellulosic filler" is advantageously meant a material primarily composed of cellulose, a complex carbohydrate derived from plants.

The term "cellulose" is intended to mean a linear homopolysaccharide derived from biomass (encompassing organic matter of plant origin, algae included cellulose of animal origin and also cellulose of bacterial origin) and consisting of units (or rings) of glucose (D-anhydroglucopyranose - AGU for "anhydro glucose unit") which are linked to one another by β-(1-4) glycosidic bonds. The repeat unit is a glucose dimer also known as cellobiose dimer.

In the context of the invention, cellulosic fillers can include various forms of cellulose, such as selected from one or more of the following compounds:
- nanocelluloses, such as cellulose nanofibrils, cellulose nanocrystals, cellulose microfibrils and cellulose nanowhiskers,
- microcrystalline celluloses,
- cellulose fibres, and
- lignocellulosic particles.

The term "nanocelluloses" denotes the various forms of cellulose with at least one dimension in the 1 - 100 nm range.

The terms "cellulose fibrils", "(cellulose) nanofibrils", "(cellulose) nanofibers", "nanofibrilated cellulose", "(cellulose) microfibrils", "microfibrilated cellulose", and "cellulose nanofibrils" are synonymous. In the remainder of the present application, the term "cellulose nanofibrils" (NFCs) will be used generically.

Each cellulose nanofibril contains crystalline parts stabilized by a solid network of inter-chain and intra-chain hydrogen bonds. These crystalline regions are separated by amorphous regions.

Elimination of the amorphous parts of cellulose nanofibrils makes it possible to obtain cellulose nanocrystals (NCCs).

NCCs advantageously comprise at least 50% of crystalline part, more preferably at least 55% of crystalline part. They generally have a diameter ranging from 5 to 70 nm (preferably less than 15 nm) and a length ranging from 40 nm to approximately 1 µm, preferably ranging from 40 nm to 500 nm.

The terms "cellulose nanocrystals", "nanocrystalline cellulose", "cellulose whiskers", "microcrystals" or "nanocrystal cellulose" are synonymous. In the remainder of the present application, the term "cellulose nanocrystals" (NCCs) will be used generically.

By "cellulose microfibrils" are advantageously meant elongated strands of cellulose chains assembled together in a partially crystalline structure. These microfibrils present a fractal, dendritic aspect within a wide range of dimensions, with diameter comprised between 10 nm and 5 µm and length between 1 µm and 1 mm.

Cellulose microfibrils such as the one commercialized by by Kadant Fiber Porcessing under the brand name MFC Kadant Biofiber^{®} BEKP is suitable for performing the claimed method.

Microcrystalline celluloses (MCC) is a term used to describe purified, partially depolymerized cellulose.

MCC is a refined cellulose product made by partially depolymerizing cellulose to remove amorphous regions, leaving behind crystalline particles.

MCC is produced by treating alpha-cellulose, obtained from wood pulp or other plant sources, with hydrochloric acid. This process hydrolyzes the amorphous regions of the cellulose, leaving behind the crystalline portions. The resulting material is then purified and dried.

MCCs have particle sizes typically in the micrometer range. Cellulose fibers are elongated strands of cellulose chains extracted from plant cell walls. They are typically several millimeters in length and have a diameter ranging from 10 to 50 micrometers.

Lignocellulosic particles are composite materials derived from plant matter. They are composed of three main components: cellulose, hemicellulose and lignin.

For instance, the lignocellulosic particles may be chosen from plant fibres, such as from forestry or from the recovery of agri-food by-products (tomato stalks, brewers' grains).

Such lignocellulosic particles may be ground to a grain size of less than 1 mm, preferably ranging from 50 µm to 200 µm.

In addition, by "polysaccharide network" is advantageously meant a three-dimensional interconnected structure of polysaccharide molecules.

Polysaccharides are complex carbohydrates composed of long chains of sugar molecules linked together.

In the context of the invention, the polysaccharide network forms the matrix of the cellular foam, providing structural support and influencing the mechanical properties of the foam.

The network is formed by the interaction between the polysaccharide molecules, which can be enhanced by the presence of other components, such as cellulosic fillers and possibly inorganic charges.

The polysaccharide network contributes to the foam's ability to retain its shape, resist compression, and provide thermal insulation.

Said at least one polysaccharide network may be selected from one or more of the following compounds:
- water-soluble cellulose esters, and
- water-soluble polysaccharide biopolymers of natural origin.

By "water-soluble", it is advantageously meant the ability of a substance to dissolve in water. A water-soluble substance forms a homogeneous solution when mixed with water.

As specified below, said compounds of the polysaccharide network may be defined by two parameters:
- an interfacial property with a surface tension, and
- thermogelling properties with a lower critical solubility temperature (LCST) and an increase in the rheological modulus.

By "an interfacial property with a surface tension", it is advantageously meant the property of a liquid to resist the force that tends to minimize its surface area. This force is caused by the attraction between the molecules of the liquid. The stronger the attraction between the molecules, the higher the surface tension.

In the context of the invention, the interfacial property with a surface tension of the water-soluble cellulose esters and the water-soluble polysaccharide biopolymers is important for their ability to stabilize the foam and prevent coalescence of the air bubbles.

Surface tension is typically measured in units of millinewtons per meter (mN/m).

Such surface tension may be measured by the method according to Nasatto et.al., Polymers (2014, 6, 2961-2973).

By "thermogelling properties with a lower critical solubility temperature (LCST) and an increase of at least an order of magnitude in the rheological modulus", it is advantageously meant the property of certain polymers to undergo a reversible sol-gel transition in response to a change in temperature.

The lower critical solubility temperature (LCST) is the temperature at which a polymer solution undergoes a phase transition from a soluble state to an insoluble state upon heating. Below the LCST, the polymer is soluble in the solvent, but above the LCST, the polymer becomes insoluble and forms a gel.

LCST is typically measured in °C, for example according to Li. et al, Macromolecules (2002), and assessed using Differential Scanning Calorimetry (DSC) and/or by following the transmittance of a diluted solution of polymer..

The rheological modulus is a measure of the stiffness or rigidity of a material. An increase in the rheological modulus indicates that the material becomes more solid-like.

The rheological modulus is a measure of the stiffness or rigidity of a material. It is usually expressed in units of Pascals (Pa) or kilopascals (kPa). An increase of at least an order of magnitude in the rheological modulus means that the modulus has increased by at least a factor of 10.

Such rheological modulus is measured for example by the following method disclosed in Li, L. Thermal Gelation of Methylcellulose in Water: Scaling and Thermoreversibility. Macromolecules 2002, 35 (15), 5990-5998.

By "an increase of at least an order of magnitude in the rheological modulus, above the said LCST", it is advantageously meant that when the temperature is raised above the LCST, the rheological modulus increases by at least a factor of 10.

In the present embodiment, cellulose esters are cellulose derivatives based on esterification products of cellulose with an inorganic or organic acid.

They include cellulose acetate, nitrate, propionate, acetate butyrate and triacetate.

Moreover, for instance, methylcellulose, hydroxypropyl cellulose, and hydroxyethyl cellulose may be suitable as water-soluble cellulose esters for forming the polysaccharide network according to the invention.

In general, they have a viscosity (such as measured according to the method described in the experimental part below - e.g. McMullen, R. L.; Ozkan, S.; Gillece, T. Physicochemical Properties of Cellulose Ethers. Cosmetics 2022, 9 (3)), at 2% by weight, as compared to the total weight of the water-soluble cellulose esters, ranging from 40 mPa.s to 8000 mPa.s, preferably ranging from 100 mPa.s to 7000 mPa.s and typically from 200 mPa.s to 1000 mPa.s.

As used herein, a "viscosity ranging from 40 mPas.s to 8000 mPs.s" includes the following values and/or any intervals comprised between these values (in mPa.s): 40; 50; 60; 70; 80; 90; 100; 120; 140; 160; 180; 200; 220; 240; 260; 280; 300; 320; 340; 360; 380; 400; 420; 440; 460; 480; 500; 600; 700; 800; 900; 1000; 1200; 1400; 1600; 1800; 2000; 2200; 2400; 2600; 2800; 3000; 3200; 3400; 3600; 4000; 4500; 5000; 5500; 6000; 6500; 7000; 7500; 8000.

Especially, the water-soluble cellulose esters may have the following properties:
- an interfacial property with a surface tension of less than 58 mN/m at concentrations below 20 g/L, and/or
- thermogelling properties, with a lower critical solubility temperature (LCST) ranging from 40°C to 80°C, and an increase of at least an order of magnitude in the rheological modulus, e.g. from at least 1 kPa to 10 kPa, preferably from 2 kPa to 8 kPa above the said LCST.

In this case, the "surface tension of less than 58 mN/m" includes a surface tension ranging from 42 to 58 mN/m.

As used herein, a "lower critical solubility temperature (LCST) ranging from 40°C to 80°C" includes the following values and/or any intervals from these values (in °C): 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80.

Also, the water-soluble polysaccharide biopolymers of natural origin may be selected from the hemicellulose family, for example chosen from the degalactosylated xyloglucan.

According to the invention, "hemicellulose" corresponds to one of a number of heteropolymers (matrix polysaccharides), such as arabinoxylans, present along with cellulose in almost all terrestrial plant cell walls; hemicelluloses are branched, shorter in length (500-3,000 sugar units) than cellulose (7,000-15,000 glucose molecules), and also show a propensity to crystallize.

Notably, the water-soluble polysaccharide biopolymers of natural origin may have the following properties:
- an interfacial property with a surface tension of less than 58 mN/m at concentrations ranging from 10 to 50 g/L, and
- thermogelling properties, with a lower critical solubility temperature (LCST) ranging from 40°C to 80°C, and an increase of at least an order of magnitude in the rheological modules, for example from at least 1 kPa to 10 kPa beyond the said LCST.

In this case, the "surface tension of less than 58 mN/m" includes a surface tension ranging from 50 to 60 mN/m.

As used herein, a "lower critical solubility temperature (LCST) ranging from 40°C to 80°C" includes the following values and/or any intervals from these values (in °C): 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80.

Furthermore, the matrix of said cellular foam may further comprise at least one inorganic filler.

By "inorganic filler" is advantageously meant a material that is not derived from living organisms and does not contain carbon-hydrogen bonds. Inorganic fillers are typically derived from mineral sources and are used to improve or modify the properties of materials.

Preferably, this inorganic filler is selected from one or more of the following compounds:
- smectite clay: a type of clay with a layered structure that can absorb water and swell;
- bentonite: a type of smectite clay;
- montmorillonite: another type of smectite clay with similar properties to bentonite;
- saponite: a type of smectite clay with a high surface area.

Such inorganic fillers are for example disclosed in Voisin et al., ACS Sustainable Chem. and Engineering. (2018).

The Applicant has found that the addition of this inorganic filler enables to improve the mechanical properties of the obtained cellular foam, as well as making the foams self-extinguishable when lit with a propane-air flame. It provides thus the foams with intrinsic fire resistance without the need of potentially harmful flame retardant chemicals, such as brominated flame-retardants.

In general, the cellular foam (or the matrix defining air-filled cells of the cellular foam) does not comprise glyoxal or other dialdehyde crosslinking agent, such as glutaraldehyde.

Indeed, in some prior art, tannic acid is added prior to foaming to improve the foam printability for 3D-printing applications. However, in such an embodiment, it is not able to impart any water resistance properties as the resulting foams is fully soluble in water. A toxic wet-strength paper agent, glyoxal, is thus necessary for the foams to display any kind of water resistance and is homogeneously distributed in the foam. Without being limited by any theory, the surface treatment in the current invention induces a very high local phenolic compound concentration and skin formation that prevented water intake.

According to a characteristic of the invention, the concentrations of said at least one cellulosic filler, said at least one polysaccharide network and possibly said at least one inorganic filler in the aqueous suspension are, respectively, from 1 to 100 g/L.

As used herein, "a concentration ranging from 1 to 100 g/L" includes the following values and/or any intervals comprised between these values (in g/L): 1, 5, 10, 15, 20, 25, 30, 35, 40, 45, 50, 55, 60, 65, 70, 75, 80, 85, 90, 95, 100.

In general, by "supplying step", it is advantageously meant the act of providing or making available said cellular foam comprising a matrix defining air-filled cells, said matrix comprising at least one cellulosic filler and at least one polysaccharide network.

This provision can be achieved through various means, including but not limited to:
- procurement: obtaining a pre-fabricated foam,
- in-situ fabrication: manufacturing the foam directly at the point of use, employing a suitable process for combining the constituents and generating the cellular structure,
- retrieval: utilizing a foam that was previously produced and stored, either on-site or at a remote location.

Especially, said supplying step of the method according to the invention comprises the following steps:
(a1) a step for the preparation of an aqueous suspension comprising a dispersion medium containing said (i) at least one cellulosic filler, said (ii) at least one polysaccharide network, and optionally said (iii) at least one inorganic charge,
(a2) a foaming step, for the introduction of air into the aqueous suspension, to obtain an aqueous foam,
(a3) a drying step which is carried out on said aqueous cellular foam to obtain a dry solid foam or a partially dry solid foam, e.g. carried out at atmospheric pressure and at a temperature ranging from 50°C to 90°C.

The sub-step (a1) involves creating a stable dispersion of the key components in dispersion medium, e.g. water, forming for example an aqueous suspension.

Then, foaming step (a2) involves introducing air into the prepared aqueous suspension.

This can be achieved through various methods. This forming step (a2) may be performed by using mechanical means. According to a characteristic of the invention, the mechanical means is high air pressure rotor/stator industrial foamer, e.g. Mondomix. According to another characteristic of the invention, the mechanical means is a whisk connected to a high-speed overhead stirrer.

The goal is to create a foam with a desired density and bubble size distribution.

Especially, step (a2) enables to achieve an air incorporation rate ranging from 20% to 80%, in particular from 30% to 70%, and typically from 40 % to 65%.

According to the invention, "an air incorporation rate ranging from 20% to 80%" includes the following values and/or any intervals comprised between these values (in °%): 20; 30; 40; 50; 60; 65; 70; 80.

In general, the resulting foam contains at least 40 % of air in volume to prevent excessive retraction during drying.

The drying step (a3) involves removing the water from the foam to obtain a solid structure.

As used herein, "a temperature ranging from 50°C to 90°C" includes the following values and/or any intervals comprised between these values (in °C): 50, 52, 54, 56, 58, 60, 62, 64, 66, 68, 70, 72, 74, 76, 78, 80, 82, 84, 86, 88, 90.

### B.2. Surface treatment step

This step involves treating the surface of the cellular foam with a solution containing at least one phenolic compound dissolved in a polar solvent.

The purpose of this treatment is to enhance the foam's water resistance, possibly by forming a protective layer on the foam's surface.

This step requires the use of a treatment medium comprising a polar solvent in which at least one phenolic compound is dissolved.

The polar solvent may be selected from:
- water,
- a simple alcohol having a linear or branched carbon chain comprising from 1 to 4 carbon atoms, including ethanol, or
- a mixture of two or more of them.

By "phenolic compound", it is advantageously meant a class of organic compounds characterized by the presence of at least one phenol groups (at least a hydroxyl group directly attached to an aromatic ring).

By "phenolic compound", it is advantageously meant a class of organic compounds that includes:
- simple phenols, preferably phenolic acids,
- polyphenols,
- a combination thereof.

In general, this definition also includes mixtures of phenolic compounds, which may comprise combinations of these different categories to achieve specific desired properties.

Simple phenols notably include gallic acid and its derivatives.

Especially, by "polyphenol compound", it is advantageously meant a class of organic compounds characterized by the presence of multiple phenolic groups (hydroxyl groups attached to aromatic rings).

Polyphenols encompass compounds such as ellagitannins and gallotannins.

For the purpose of the present invention, ellagitannins advantageously include, but are not limited to punicalagins, castalagins (also known as Vescalagins), castalins, casuarictins, grandinins, punicalins, roburin A, tellimagrandin II, terflavin B.

These compounds can be used individually or in combination, in their pure form or within mixtures of phenolic compounds, to meet the desired characteristics according to the invention.

For the purpose of the present invention, gallotannins advantageously include, but are not limited to digalloyl glucose, 1,3,6-Trigalloyl glucose, 1,2,3,4,6-Pentagalloyl glucose, tannic acid.

These compounds can be used individually or in combination, in their pure form or within mixtures of phenolic compounds, to achieve the desired properties according to the invention.

In general, the at least one phenolic compound is advantageously selected from phenolic compounds capable of complexing and/or configured to complex with said at least one polysaccharide network.

For instance, the following phenolic compounds are suitable for performing the method according to the invention: tannic acid, gallic acid, or epigallocatechin.

Preferably, the phenolic bath comprises:
- a solution composed of tannic acid and ethanol used as solvent; ethanol enables a quick treatment and a low concentration of tannic acid;
- a solution composed of tannic acid and water; this second bath is safer to handle but requires higher tannic acid concentration and longer treatment time.

According to a characteristic of the invention, the concentration of at least one phenolic compound in said treatment medium (or polar solvent) is preferably within the range from 1 g/L to 100 g/L.

As used herein, "a concentration ranging from 1 to 100 g/L" includes the following values and/or any intervals comprised between these values (in g/L): 1, 5, 10, 15, 20, 25, 30, 35, 40, 45, 50, 55, 60, 65, 70, 75, 80, 85, 90, 95, 100.

Generally, the surface treatment step may be selected from:
(b1) an immersion stage, in which said cellular foam is immersed in said treatment medium, and
(b2) a spray step, wherein said treatment medium is sprayed onto said cellular foam.

For this surface treatment step, the exposure time may be within the range from 30 seconds to 24 hours, preferably from 3 minutes to 1 hour, and typically from 5 minutes to 20 minutes, such as 10 minutes.

As used herein, "a exposure time within the range from 30 seconds to 24 hours" includes the following values and/or any intervals comprised between these values : 30 sec, 1 min, 2 min, 3 min, 4 min, 5 min, 6 min, 7 min, 8 min, 9 min, 10 min, 11 min, 12 min, 13 min, 15 min, 16 min, 17 min, 18 min, 19 min, 20 min, 25 min, 30 min, 45 min, 1 h, 2 h, 3h, 4 h, 5h, 6h, 7 h, 8h, 9h, 10h, 11h, 12h, 13h, 14h, 15h, 16h, 17h, 18h, 19h, 20h, 21h, 22h, 23h, 24h.

Also, the pH of the treatment medium (or polar solvent) is within the range from 3 to 8, preferably within the range from 3 to 4.

In general, the (b) surface treatment step is applied to the cellular foam in a state selected from:
- a dry state, forming a solid foam, following a drying step (that is to say, after step (a3)),
- a wet foamed state (expanded but not dried) forming an aqueous foam, before a possible drying stage (that is to say, after step (a2) or prior step (a3), or
- a partially dried state, forming a partially solid foam, during a drying step, e.g. corresponding to 0% to 100% of the time required for water removal (that is to say, during step (a3) or a drying step which is not complete).

### C) The cellular foam

The invention also relates to a cellular foam derived from a manufacturing method as defined above.

Obviously, the various embodiments described above for the method of manufacturing, also apply to the cellular foam and will not be repeated below.

Notably, the invention deals with a cellular foam comprising a matrix defining air-filled cells, said matrix being composed of (i) at least one cellulosic filler, (ii) at least one polysaccharide network and optionally (iii) at least one inorganic charge.

And, according to the invention, said matrix is coated with a protective film composed of at least one phenolic compound which has complexed with said at least one polysaccharide network, said at least one phenolic compound being preferably selected from tannic acid, gallic acid or epigallocatechin or a mixture thereof.

By "matrix is coated with a protective film composed of at least one phenolic compound which has complexed with said at least one polysaccharide network", it is advantageously meant that the structure of the material (the matrix) is covered with a layer or film formed by the interaction between phenolic compounds and a polysaccharide network.

Without being limited to any theory, this coating process involves chemical or physical bonding, where the phenolic compounds interact with the polysaccharides to form a stable and water insoluble complex, enhancing the material's water resilience properties.

Preferably, the protective film that forms from this complex provides several beneficial properties. It improves the water resistance of the matrix, as phenolic compounds can reduce the hydrophilicity (tendency to absorb water) of the polysaccharide network.

Of course, various other amendments may be made to the invention within the framework of the annexed claims.

### Examples

Different cellular foams according to the invention were prepared having a volume weight in the 25-50 kg/m3 range with a water uptake inferior or equal to 0.5 gr/gr solid after the surface treatment.

### 1. Raw materials

The different solid cellular foams are prepared from:
- cellulose microfibrils commercialized by Kadant Fiber Porcessing under the brand name MFC Kadant Biofiber^{®} BEKP,
- methylcellulose, MC, commercialized by IFF under the band name Methocel^{™} A4C having the following characteristics: 400 cp or mPa.s viscosity in a 2 wt.% solution, number average molecular weight Mn ≈ 41kDa,
- and tannic acid as sold by Sigma-Aldrich with the typical American Chemical Society (ACS) reagent grade i.e.: meets or exceeds purity standard).

### 2. Examples

**Method for obtaining a solid cellular foam having a very low density (< 30 kg.m-3) presenting mechanical properties making it well suited for insulating applications.**

### Example 1 : Step (a1): preparation of the initial suspension, named hereafter "Formulation 1"

Twenty litres of enzymatically defibrillated cellulose microfibrils at 20 g/L are weighted in a 50 L bucket. The suspension is then strongly sheared with a rotor-stator type homogenizer (e.g. Ultra-Turrax) at full speed during 10 minutes to achieve the optimal defibrillation of the microfibrils.

The suspension in a covered bucket is then heated to 60°C using a heated water bath under stirring using an overhead stirrer.

400 g of methylcellulose (characterized by a 4000 cp (mPa.s) viscosity in a 2 wt. % aqueous solution) are weighted. The powder is then progressively added to the cellulose suspension under strong (> 300 rpm) stirring.

The suspension is stirred at 60°C for 30 minutes, before being cooled down at room temperature and maintained under soft stirring (<100 rpm) for 12 hours.

### Step (a2): Foaming of the suspension

The viscous suspensions obtained at the end of step 1 is then foamed using mechanical means.

For this example 1, the mechanical means is high air pressure rotor/stator industrial foamer, e.g. Mondomix (named hereafter, **"Protocol 2.a").** The resulting foam contains 52 % of air in volume.

Especially, typical parameters for the Protocol 2.a involve 800 rpm after a progressive increase of the rotating speed and 35L of air injected per hour of foaming. The foaming carries on to the point when the whole volume of suspension went through the instrument.

### Step (a3): drying of the liquid foam into solid cellular foam

The viscoelastic foam obtained at the end of step 2 is then shaped in a mould presenting the required volume (panel) in a way to maximize the surface area of the resulting solid. Here, a square panel will present a side-to-thickness ratio of at least 15 cm (15 cm wide to 1 cm thick). The maximum thickness of the foam is 3 cm to insure minimal heterogeneity of the foam structure along its z-axis. As the foam retains the shape of the mould it is dried into, of course more convoluted mould shapes can be designed if specific foam shape are wanted.

The filled mould is then placed into an oven at a temperature of 80 °C. The foam is left in the oven until full elimination of the water in the liquid foam. The foam can be taken out of the mould and further characterized.

### Step (b): surface treatment of the solid cellular foam

The surface treatment of the solid cellular foam is designed to prevent the dissolution of the polysaccharidic matrix and to prevent the diffusion of water into the foam through soaking in a polyphenolic bath especially, a tannic acid-based solution.

For this example 1, the polyphenolic bath comprises a solution composed of tannic acid and ethanol used as solvent, named hereafter **"Bath solution 1".** Ethanol enables a quick treatment and a low concentration of tannic acid.

Bath solution 1: Ethanol based 5 g/L tannic acid solution is prepared. This bath solution 1 is stable over a week time.

The dry foam is exposed to a tannic acid-based surface treatment via simple immersion. The foam is maintained in the tannic acid bath, under the liquid surface. Special care must be given to insure homogeneous exposition of the solid surface to the tannin bath. The foam is kept in the bath for 60 min for the water-based solution, and 1 min for the ethanol-based solution. Each solution can be used to treat large quantities of material, with a one-litre batch enough to treat more than 10 kg solid.

The foam is then placed in an oven in the 60 - 80 °C temperature range until complete drying (less than an hour), especially at 80°C.

### Example 2

Example 1 is reproduced except that step (b) was performed in a polyphenolic bath which is aqueous, named hereafter **"Bath solution 2".** This second bath is safer to handle but requires higher tannic acid concentration and longer treatment time.

Bath solution 2: Water based. 100 g/L tannic acid solution is dissolved prepared. The pH is controlled to be in the 8-8.5 range. Such solution is unstable and must be used in the day following the preparation.

### Example 3

### 3. Characterisation and results

### 3.1 Characterisation

### * Physical properties

The dimension of the dry cellular foams is measured using ruler and calliper.

The retraction percentage is evaluated as the fraction of decrease of the dry foam dimension compared to the dimension of the mould in which the wet foam was dried. Their mass is evaluated using a scale with a 0.01 g resolution.

The resulting bulk density is obtained from the ρ=m/V relation, where ρ is the density in kg.m⁻³, m the mass in kg and V the volume in m³.

The rheological properties are assessed using a rheometer with a plate-plate geometry at 1 Hz and 0.1 % strain, with a 1 mm gap. Both storage modulus G' and loss modulus G"of the wet suspension or cellular foam are obtained respectively as the real and imaginary part of the dynamic modulus obtained from the response of the materials to the oscillatory solicitation.

### * Mechanical testing

The mechanical properties of the resulting dry materials are tested using a compression test apparatus (e.g. Instron 5944 equipped with a 500 N load cell on rectangular pieces of foams measured using a calliper). Pieces of the material are cut to fit the apparatus geometry. The measurements were performed at a compression rate of 10%/min from 0 to 80% strain. The sensitivity of the measuring load cell is chosen to accommodate solid with a Young Modulus in the 100 kPa-1MPa range. No anisotropy of the material in regards of its drying orientation was demonstrated, hence the tests can be performed in any orientation of the solid. Compression is performed at 10 %/min.

The young modulus, E, of the cellular foam is measured as the slope of the curve plotting stress as a function of strain in the elastic region, *i.e.* before the plastic yielding plateau, between 6 to 15 % strain for the example 1.

### * Intake of water

The obtained cellular foams according to the claimed method (and treated with a surface treatment) are first weighted (i.e.: initial weight), then soaked into a water bath for 10 minutes, then taken out of the bath, blotted with paper with minimal alteration of the surface and then weighted again (i.e.: final weight). Thus, the intake of water corresponds the difference between the final weight and the initial weight.

### 3.2 Results

The results are shown on the Table 1 below:

**Table 1**

| Examples | Ex.1 | Ex.2 |
|---|---|---|
| G' suspension (end of step 1) | 720 Pa | 720 Pa |
| G' foam | 1200 Pa | 1200 Pa |
| G" suspension | 271 Pa | 271 Pa |
| G" foam | 310 Pa | 310 Pa |
| Density before surface treatment | 28.7 kg/m3 | 28.7 kg/m3 |
| Density after surface treatment | 29.5 kg/m3 | 31.8 kg/m3 |
| Young modulus (KPa) | 674 | 674 |
| Intake of water (after surface treatment) | 0.34 g/g | 0.41 g/g |

Prior to the foaming (end of step 1), the different suspensions according to examples present a homogeneous aspect. It also displays a gel like behaviour, with a storage modulus (G') above its loss modulus (G"), with typical values at G' ≈ 500 Pa and G" ≈ 300 Pa.

Foaming, as previously described, typically injects between 40-60 % in volume of air in the suspension. It also generally increases G' to ≈ 1200 Pa and increases G" to ≈ 310 Pa for the examples based on Formulation 1.

Density of solid cellular foams obtained for Formulation 1 are in the 25-35 kg.m⁻³ range. The variation of density before and after surface treatment is generally very low.

Table 2 below shows the mechanical properties of the obtained cellular foams (example 1))

**Table 2**

| Example | Ex.1 |
|---|---|
| Strain(%) | Stress (kPa) |
| 0 | 0 |
| 10 | 42.2 |
| 20 | 101.9 |
| 30 | 118.7 |
| 40 | 122 |
| 50 | 126.8 |
| 60 | 142.9 |
| 70 | 179 |
| 80 | 300 |

The obtained cellular foams 8 exhibit a response to compressive test which is typical to cellular solid (see Table 2), with an initial elastic response in the 0-20 % strain range corresponding to an elastic deformation of the structure along which the Young's modulus (around 680 kPa for Formulation 1, around 1500 kPa for Formulation 2). It is followed by the crumbling of the cell walls corresponding to a stress plateau (compressive strength, in the 120-130 kPa range for Formulation 1, in the 250 kPa range for Formulation 2) in the 20 to 60 % deformation, before the densification step. Measurement can be performed at various relative humidity to assess the sensitivity of the solids to various environmental conditions.

In addition, after the surface treatment in either Bath solution 1 or Bath solution 2, the intake of water is less than 0.3 gr/gr of solid cellular foam, while untreated foams dissolve in water. Therefore, the method according to the invention enables to obtain water resistant foam.

When compared to the prior art, the treatment using a phenolic compound based in opposition to its addition prior to foaming offers a greatly improved water resilience. In the prior art, the foams required an additional wet strength agent (glyoxal) at substantial concentrations for the foams to present any water resilience; in absence of glyoxal, the foam would dissolve in a similar fashion that the foams presented here prior the phenolic compound bath.

## Claims

1. Method for manufacturing a cellular foam with surface treatment, the manufacturing method comprising the following steps:
(a) a supplying step, for providing a cellular foam comprising a matrix defining air-filled cells, which matrix comprises (i) at least one cellulosic filler and (ii) at least one polysaccharide network, and
(b) a surface treatment step, during which said cellular cell foam is exposed to a treatment medium comprising a polar solvent in which at least one phenolic compound is dissolved.

2. Manufacturing method according to claim 1, wherein said (i) at least one cellulosic filler is selected from:
- nanocelluloses, e.g. selected from cellulose nanofibrils, cellulose nanocrystals, cellulose microfibrils and cellulose nanowhiskers,
- microcrystalline celluloses,
- cellulose fibres, and
- lignocellulosic particles, for example chosen from plant fibres, for example from forestry or from the recovery of agri-food by-products (tomato stalks, brewers' grains), ground to a grain size of less than 1 mm, preferably 50 to 200 µm.

3. Manufacturing method according to claim 1 or 2, wherein said (ii) at least one polysaccharide network is selected from:
- water-soluble cellulose esters, e.g. selected from methylcellulose, hydroxypropyl cellulose, and hydroxyethyl cellulose, preferably with a viscosity of 2% by weight ranging from 40 to 8000 cP, and
- water-soluble polysaccharide biopolymers of natural origin, from the hemicellulose family, for example chosen from the degalactosylated xyloglucan.

4. Manufacturing method according to claim 3, wherein said water-soluble cellulose esters have the following properties:
- an interfacial property with a surface tension of less than 58 mN/m at concentrations below 20 g/L, and
- thermogelling properties, with a lower critical solubility temperature (LCST) ranging from 40°C to 80°C, and an increase of at least an order of magnitude in the rheological modulus, e.g. from at least 1 kPa to 10 kPa above the said LCST.

5. Manufacturing method according to claim 3, wherein the water-soluble polysaccharide biopolymers of natural origin have the following properties:
- an interfacial property with a surface tension of less than 58 mN/m at concentrations ranging from 10 to 50 g/L, and
- thermogelling properties, with a lower critical solubility temperature (LCST) ranging from 40°C to 80°C, and an increase of at least an order of magnitude in the rheological modules, for example from at least 1 kPa to 10 kPa beyond the said LCST.

6. Manufacturing method according to any one of the preceding claims 1 to 5, wherein the matrix of said cellular foam comprises also (iii) at least one inorganic filler, preferably selected from one or more of the following compounds: a smectite clay, in particular selected from bentonite, montmorillonite, and saponite.

7. Manufacturing method according to any one of the preceding claims 1 to 6, wherein said at least one phenolic compound is selected from phenolic compounds capable of complexing and/or configured to complex with said at least one polysaccharide network, e.g. tannic acid, gallic acid, or epigallocatechin.

8. Manufacturing method according to any one of the preceding claims 1 to 7, wherein (b) said surface treatment step is selected from:
- an immersion stage, in which said cellular foam is immersed in said treatment medium, and
- a spray step, wherein said treatment medium is sprayed onto said cellular foam.

9. Manufacturing method according to any one of the preceding claims 1 to 8, wherein the polar solvent is selected from: water, a simple alcohol having a linear or branched carbon chain comprising from 1 to 4 carbon atoms, including ethanol, or a mixture of two or more of them.

10. Manufacturing method according to any one of claims 1 to 9, wherein (b) said surface treatment step comprises at least one of the following features:
- the concentration of at least one phenolic compound in said treatment medium is within the range from 1 g/L to 100 g/L,
- the exposure time is from 30 seconds to 24 hours, preferably 10 minutes,
- the pH of the treatment medium is within the range from 3 to 8, preferably within the range from 3 to 4.

11. Manufacturing method according to any one of the preceding claims 1 to 10, wherein said (a) supply step comprises the following steps:
(a1) a step for the preparation of an aqueous suspension comprising a dispersion medium containing: said (i) at least one cellulosic filler, said (ii) at least one polysaccharide network, and optionally said (iii) at least one inorganic charge,
(a2) a foaming step, for the introduction of air into the aqueous suspension, to obtain an aqueous foam.
(a3) a drying step which is carried out on said aqueous cellular foam to obtain a dry solid foam or a partially dry solid foam, e.g. carried out at atmospheric pressure and at a temperature ranging from 50 to 90°C.

12. Manufacturing method according to any one of claims 1 to 11, wherein said (b) surface treatment step is applied to said cellular foam in a state selected from:
- a dry state, forming a solid foam, following a drying step,
- a wet foamed state (expanded but not dried) forming an aqueous foam, before a possible drying stage, or
- a partially dried state, forming a partially solid foam, during a drying step, e.g. corresponding to 0% to 100% of the time required for water removal.

13. Manufacturing method according to claim 11, wherein said (a2) at least one foaming step is performed to achieve an air incorporation rate ranging from 20% to 80%.

14. A cellular foam derived from a manufacturing method according to any one of the preceding claims 1 to 13.

15. Cellular foam comprising a matrix defining air-filled cells, said matrix being composed of (i) at least one cellulosic filler, (ii) at least one polysaccharide network and optionally (iii) at least one inorganic charge, **characterized in that** said matrix is coated with a protective film composed of at least one phenolic compound which has complexed with said at least one polysaccharide network, said at least one phenolic compound being preferably selected from tannic acid, gallic acid or epigallocatechin or a mixture thereof.
